# EUROPEAN PATENT APPLICATION

(11) **EP 4 712 415 A1**
(43) Date of publication of application: **18.03.2026**
(21) Application number: 25200477.5
(22) Date of filing: 05.09.2025
(51) Int. Cl.: H04L 12/28, G05B 15/00, G06F 9/00, G05B 15/02

(54) **DEVICE OPERATING IN SMART HOME SYSTEM, SMART HOME SYSTEM AND CORRESPONDING METHOD**

(30) Priority: 13.09.2024 US 202418885538
(71) Applicant: TP-Link Systems Inc., Irvine, California 92618 (US)
(72) Inventor: WU, Jialiang, Shenzhen, 518000 (CN); YANG, Tao, Shenzhen, 518000 (CN)
(74) Representative: Marks & Clerk LLP

(57) **Abstract**

This disclosure provides a device operating in smart home system, a smart home system, corresponding method and computer program product. The smart home system may include a first endpoint, a second endpoint, a plurality of trigger devices and a plurality of responding devices. Each trigger device is configured to generate one or more trigger events; and send them to the first endpoint and the second endpoint. The first endpoint is configured to generate a set of first endpoint commands and send them to a responding device among the plurality of responding devices. The second endpoint is configured to generate a set of second endpoint commands and send them to the responding device. The responding device is configured to perform a set of actions based on the set of first endpoint commands and the set of second endpoint commands.

## Description

### CROSS-REFERENCE TO RELATED APPLICATION

This Patent application claims priority of the U.S. Patent Application No. 18/885,538, filed on September 13, 2024, and titled "DEVICE OPERATING IN SMART HOME SYSTEM, SMART HOME SYSTEM AND CORRESPONDING METHOD", the disclosure of which is incorporated herein by reference in its entirety as part of the present application.

### TECHNICAL FIELD

The present disclosure relates to the field of smart home, and more specifically, to a device operating in smart home system, a smart home system, corresponding method and computer program product.

### BACKGROUND

Smart home refers to a home lifestyle that intelligently controls and manages all kinds of equipment, furniture and electrical appliances in home, office and public places through internet technology. Smart home has a wide range of application scenarios, covering smart speakers, door locks, lighting, air conditioning, meetings and other systems, making life more convenient, comfortable and safe. With the development of home intelligence, automatic control or linkage control can be realized for smart home devices, for example, when we go home and open the door, the lights can be turned on or music can be played automatically, or when temperature of a room is above a predetermined temperature, air conditioner can be turned on automatically for a certain period of time.

### SUMMARY

The present disclosure provides techniques for a device to operate in a smart home environment efficiently. In particular, the present disclosure provides a device operating in smart home system, a smart home system, corresponding method and computer program product. Through the techniques described herein, commands can be generated and sent in parallel from a first endpoint and a second endpoint to a controlled device, i.e., a responding device in a smart home environment, so as to control the device to perform one or more desired linkage actions in the smart home environment. In this way, a real "twin-control" mechanism can be realized, a success rate of execution of linkage actions and in turn a reliability of smart home control can be improved.

According to an aspect of the present disclosure, there is provided a device operating in a smart home system. The device can comprise one or more processors; a memory coupled to at least one of the processors; and a set of computer program instructions stored in the memory. The set of computer program instructions, when executed by at least one of the processors, performs the following actions: receiving a set of first endpoint commands from a first endpoint, wherein the set of first endpoint commands is generated by the first endpoint in response to one or more trigger events satisfying a first trigger condition; receiving a set of second endpoint commands from a second endpoint, wherein the set of second endpoint commands is generated by the second endpoint in response to the one or more trigger events satisfying the first trigger condition; and performing a set of actions for the smart home system based on the set of first endpoint commands and the set of second endpoint commands

In some embodiments, each command in the set of first endpoint commands and the set of second endpoint commands can carry a command ID, and performing the set of actions can comprise performing one of a first action indicated by a first command in the set of first endpoint commands and a second action indicated by a second command in the set of second endpoint commands, wherein the first command and the second command can carry a same command ID.

In some embodiments, the set of computer program instructions further performs actions of maintaining a queue of command IDs, and wherein each command ID in the queue corresponds to an action that has been performed within a predetermined period.

According to another aspect of the present disclosure, there is provided a smart home system comprising a first endpoint, a second endpoint, a plurality of trigger devices and a plurality of responding devices. Each of the plurality of trigger devices can be configured to generate one or more trigger events; and send the one or more trigger events to the first endpoint and the second endpoint. The first endpoint can be configured to generate a set of first endpoint commands in response to determining that the one or more trigger events satisfy a first trigger condition; and send the set of first endpoint commands to a responding device among the plurality of responding devices. The second endpoint can be configured to generate a set of second endpoint commands in response to determining that the one or more trigger events satisfy the first trigger condition; and send the set of second endpoint commands to the responding device. The responding device can be configured to perform a set of actions based on the set of first endpoint commands and the set of second endpoint commands.

In some embodiments, the first endpoint can be a gateway, and the second endpoint can be a cloud server.

In some embodiments, a first set of rules can be maintained at the first endpoint and a second set of rules can be maintained at the second endpoint, each rule can indicate a trigger condition and one or more actions corresponding to the trigger condition, and the trigger condition can indicate a set of trigger events. The first set of rules can be a subset of the second set of rules.

In some embodiments, the second endpoint can be further configured to determine one or more rules from the second set of rules that are executable by the first endpoint based on a change in a topology of the smart home system reported by the first endpoint, wherein the topology is related to trigger devices and responding devices which have established connections with the first endpoint; and send the one or more rules to the first endpoint.

In some embodiments, the first endpoint can be further configured to determine whether the one or more rules sent by the second endpoint are supported based on the topology and metadata maintained at the first endpoint, wherein the metadata indicates one or more trigger events that can be generated by each trigger device connected to the first endpoint, and one or more actions that can be performed by each responding device connected to the first endpoint and controlled by the first endpoint; and store the one or more rules at the first endpoint in response to determining that the one or more rules are supported.

In some embodiments, the second endpoint can be further configured to determine one or more rules in the first set of rules that are not executable by the first endpoint based on a change in a topology of the smart home system reported by the first endpoint, wherein the topology is related to trigger devices and responding devices which have established connections with the first endpoint; and notify the one or more rules to the first endpoint.

In some embodiments, the first endpoint can be further configured to delete the one or more rules from the first set of rules.

In some embodiments, the first endpoint can be further configured to establish connections with the plurality of trigger devices and the plurality of responding devices before receiving the one or more trigger events.

In some embodiments, the plurality of trigger devices and the plurality of responding devices can be divided into low-power devices and direct-connected devices. The first endpoint can establish a connection with a low-power device through low-power wireless communication protocols, and establish a connection with a direct-connected device through a persistent connection.

In some embodiments, determining that the one or more trigger events satisfy the first trigger condition can comprise determining whether the one or more trigger events comprise all trigger events indicated by the first trigger condition.

In some embodiments, generating the set of first endpoint commands by the first endpoint can comprise generating each first endpoint command based on an action of one or more actions indicated in the first set of rules, the one or more actions corresponding to the first trigger condition; and generating a first endpoint command ID carried by each first endpoint command based on unique event ID(s) of the one or more trigger events and the first endpoint command, and generating the set of second endpoint commands by the second endpoint can comprises generating each second endpoint command based on an action of one or more actions indicated in the second set of rules, the one or more actions corresponding to the first trigger condition; and generating a second endpoint command ID carried by each second endpoint command based on unique event ID(s) of the one or more trigger events and the second endpoint command.

In some embodiments, each command in the set of first endpoint commands and the set of second endpoint commands can carry a command ID, and performing the set of actions by the responding device can comprise performing one of a first action indicated by a first command in the set of first endpoint commands and a second action indicated by a second command in the set of second endpoint commands, wherein the first command and the second command can carry a same command ID.

In some embodiments, the responding device can maintain a queue of command IDs, each command ID in the queue can correspond to an action that has been performed within a predetermined period.

According to yet another aspect of the present disclosure, there is provided a method of controlling a responding device in a smart home system. The method can comprise receiving one or more trigger events by a first endpoint and a second endpoint respectively; generating a set of first endpoint commands by the first endpoint in response to determining that the one or more trigger events satisfy a first trigger condition; generating a set of second endpoint commands by the second endpoint in response to determining that the one or more trigger events satisfy the first trigger condition; and sending the set of first endpoint commands to the responding device by the first endpoint, and sending the set of second endpoint commands to the responding device by the second endpoint, to control the responding device to perform a set of actions.

In some embodiments, each command in the set of first endpoint commands and the set of second endpoint commands can carry a command ID, and performing the set of actions can comprise performing one of a first action indicated by a first command in the set of first endpoint commands and a second action indicated by a second command in the set of second endpoint commands, wherein the first command and the second command can carry a same command ID.

In some embodiments, a first set of rules can be maintained at the first endpoint and a second set of rules can be maintained at the second endpoint, each rule can indicate a trigger condition and one or more actions corresponding to the trigger condition, and the trigger condition can indicate a set of trigger events. The first set of rules can be a subset of the second set of rules.

In some embodiments, the method can further comprise determining, by the second endpoint, one or more rules from the second set of rules that are executable by the first endpoint based on a change in a topology of the smart home system reported by the first endpoint, wherein the topology is related to trigger devices and responding devices which have established connections with the first endpoint; and sending the one or more rules to the first endpoint by the second endpoint.

In some embodiments, the method can further comprise determining, by the first endpoint, whether the one or more rules sent by the second endpoint are supported based on the topology and metadata maintained at the first endpoint, wherein the metadata indicates one or more trigger events that can be generated by each trigger device connected to the first endpoint, and one or more actions that can be performed by each responding device connected to the first endpoint and controlled by the first endpoint; and storing the one or more rules at the first endpoint in response to determining that the one or more rules are supported.

According to still yet another aspect of the present disclosure, there is provided a computer program product for controlling a responding device in a smart home system. The computer program product can comprise a non-transitory computer readable storage medium having program instructions embodied therewith, the program instructions are executable by a processor to cause the processor to perform any one of the above methods.

At least based on the above embodiments of the present disclosure, commands can be generated and sent from both a first endpoint and a second endpoint respectively to a controlled device, i.e., a responding device in a smart home environment, so as to control the device to perform one or more desired linkage actions in the smart home environment. In this way, a real "twin-control" mechanism can be realized, a success rate of execution of linkage actions and in turn a reliability of smart home control can be improved.

### BRIEF DESCRIPTION OF DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps or elements.
Fig. 1 shows a schematic diagram of a smart home system according to an embodiment of the present disclosure;
Fig. 2 shows a schematic diagram of interactions between a first endpoint and a second endpoint for communicating rules according to an embodiment of the present disclosure;
Fig. 3 shows a flowchart of a method of controlling a responding device in a smart home system according to an embodiment of the present disclosure;
Fig. 4 shows an exemplary block diagram illustrating a device according to an embodiment of the present disclosure.

### DETAILED DESCRIPTION

The technical solution of the present disclosure will be clearly and completely described below in conjunction with accompanying drawings. Obviously, the described embodiments are part of embodiments of the present disclosure, but not all of them. Based on the embodiments in the present disclosure, all other embodiments obtained by ordinary skilled in the art without making any creative efforts fall within the scope of protection of the present disclosure.

In the description of the present disclosure, it should be noted that terms such as "first", "second" and "third" are only for descriptive purposes, whereas cannot be understood as indicating or implying relative importance. Likewise, words like "a", "an" or "the" do not represent a quantity limit, but represent an existence of at least one. Words like "include" or "comprise" mean that an element or an object in front of said word encompasses those ones listed following the said word and their equivalents, without excluding other elements or objects.

In addition, technical features involved in different embodiments of the present disclosure described below may be combined with each other as long as no conflicts occur therebetween.

In a smart home system, a linkage center or a control center plays an important role. It is capable of managing linkage rules, receiving trigger events, determining whether the trigger events satisfy trigger conditions based on the linkage rules, and sending commands to one or more responding devices to control them to perform one or more actions if trigger conditions are satisfied. The linkage center can be a remote device (for example, a cloud server) or an apparatus in a local network (for example, a gateway) with a corresponding processing capability. In order to function as the linkage center, the cloud server requires that trigger devices and responding devices in the smart home environment to be connected to the cloud, while the gateway requires that trigger devices and responding devices to be in the same local area network (LAN) as the apparatus.

At present, linkage control in a smart home environment can be realize through various ways. A first scheme is to perform linkage control on devices in the smart home environment through the apparatus in the local network which functions as the linkage center. The advantage of this scheme is that an average time consumption for linkage control can be short, while the disadvantage is that a success rate of the linkage control depends on the performance and stability of the apparatus in the local network, and linkage rules are customized and cannot vary with time. A second scheme is to perform the linkage control on devices in the smart home environment through the remote device which functions as the linkage center. The advantage of this scheme is that the success rate is higher as compared to that of the first scheme, while the disadvantage is that a complete execution path (from the trigger devices to the remote device and from the remote device to the responding devices) is long, and the average time consumption cannot be very short. A third scheme is to perform the linkage control on devices in the smart home environment through both the apparatus in the local network and the remote device. In this scheme, a control command may be generated through a control device and sent to the responding devices through the apparatus in the local network and the remote device respectively. The disadvantage of this scheme is that if the control device fails, no command can be generated and the linkage control cannot be realized. A fourth scheme is to perform the linkage control on devices in the smart home environment through selection of one of the apparatus in the local network and the remote device as the linkage center. Specifically, if related trigger devices and responding devices are in the same LAN as the apparatus, the apparatus is selected as the linkage center, otherwise, the remote device is selected as the linkage center. The disadvantage of this scheme is that when the execution of linkage control fails on the selected execution path (from the trigger devices to the selected linkage center and from the selected linkage center to the responding devices), it is not possible to switch to another path in time to retry execution, resulting in a low success rate of linkage control.

In view of the above problems, the present disclosure provides a device operating in smart home system, a smart home system, corresponding method and computer program product. Through the techniques described herein, commands can be generated and sent in parallel from a first endpoint and a second endpoint to a controlled device, i.e., a responding device in a smart home environment, so as to control the device to perform one or more desired linkage actions in the smart home environment. In this way, a real "twin-control" mechanism can be realized, a success rate of execution of linkage actions and in turn a reliability of smart home control can be improved.

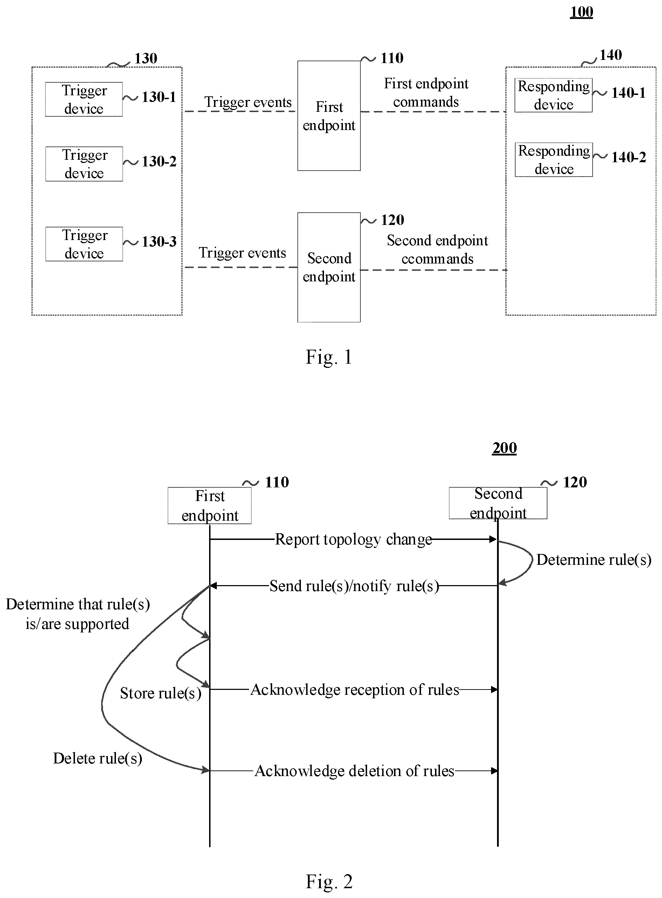

The following descriptions will be made with reference to Fig. 1. It is shown a schematic diagram of a smart home system 100 according to an embodiment of the present disclosure. As shown in Fig. 1, the smart home system 100 can comprise a first endpoint 110 in a local network, a second endpoint 120, a plurality of trigger devices 130 and a plurality of responding devices 140. Trigger devices 130 usually comprise cameras, audio circuits, and sensors such as ambient light sensors, motion sensors, temperature and humidity sensors, and other sensors. Each of the plurality of trigger devices 130 can be configured to generate one or more trigger events. For example, a temperature and humidity sensor can sense the indoor temperature and humidity as a trigger event, an illumination sensor can judge the degree of illumination by measuring the intensity of light, and converts this information into electrical signals as trigger events. Each trigger event can carry a unique event identifier (ID), and the unique event ID can be related to a time stamp reflecting the occurring time of the trigger event. Each of the plurality of trigger devices 130 can further be configured to send the generated one or more trigger events to the first endpoint 110 and the second endpoint 120.

In some embodiments, the first endpoint 110 may be a gateway, and the second endpoint 120 may be a cloud server. In this way, commands can be generated and sent in parallel from different kinds of equipment to a responding device in a smart home environment, so as to control the device to perform one or more desired actions in the smart home environment. In some embodiments, both the first endpoint 110 and the second endpoint 120 may be a gateway respectively, which can also improve performance and stability of the smart home environment.

The first endpoint 110 can be configured to generate a set of first endpoint commands in response to determining that the one or more trigger events satisfy a first trigger condition. Similarly, the second endpoint 120 can be configured to generate a set of second endpoint commands in response to determining that the one or more trigger events satisfy the first trigger condition. The set of first endpoint commands and the set of second endpoint commands can correspond to a same set of controlled actions to be performed by a responding device.

In some embodiments, a first set of rules can be maintained at the first endpoint 110 in the local network and a second set of rules can be maintained at the second endpoint. Each rule in the first set of rules and the second set of rules can indicate a trigger condition and one or more actions corresponding to the trigger condition. The trigger condition can indicate a set of trigger events. For example, the trigger condition can indicate people entering into the house, and the one or more actions corresponding to the trigger condition can be turning on the light at the door or in the living room, and playing light music. In another example, the trigger condition can indicate there is nobody in the bedroom and the light in the bedroom is turned on, and the one or more actions corresponding to the trigger condition can be turning off the light in the bedroom.

All the rules related to linkage control in the smart home system or smart home environment may be maintained and managed at the second endpoint 120, including rules added or edited by users over time. The first endpoint 110 may only maintain or store rules that are related to the first endpoint 110 or can be executed by the first endpoint 110, so as to save its storage resources. Therefore, in some embodiments, the first set of rules can be a subset of the second set of rules or includes a part of the rules in the second set of rules. For example, the first set of rules can be selected by the second endpoint 120 from the second set of rules, and sent from the second endpoint 120 to the first endpoint 110. In this way, storage resources of the first endpoint 110 can be saved and a same trigger condition may correspond to the same one or more actions for the first endpoint 110 and the second endpoint 120.

In order to communicate rules between the first endpoint 110 and the second endpoint 120, the first endpoint 110 can record a topology of the smart home system locally, and report the topology to the second endpoint 120 whenever there is a change in the topology. The topology can be related to trigger devices and responding devices which have established connections with the first endpoint 110. Through checking the change of the topology, the second endpoint 120 can determine whether one or more trigger devices and/or responding devices have newly established connections with the first endpoint 110 or have disconnected from the first endpoint 110. Using this information, the second endpoint 120 can determine which rule is executable by the first endpoint 110 and therefore should be sent to the first endpoint 110, or determine which rule is no longer executable by the first endpoint 110 and therefore should be deleted from the first endpoint 110.

It is shown a schematic diagram of interactions between the first endpoint 110 and the second endpoint 120 for communicating rules according to an embodiment of the present disclosure in Fig. 2. As shown in Fig. 2, the first endpoint 110 may report a change in a topology of the smart home system to the second endpoint 120, which topology can be related to trigger devices 130 and responding devices 140 which have established connections with the first endpoint 110. The second endpoint 120 may determine one or more rules from the second set of rules that are executable by the first endpoint 110 based on the reported change in the topology by the first endpoint 110, or determine one or more rules in the first set of rules that are not executable by the first endpoint based on the reported change in the topology by the first endpoint 110.

In one case, the second endpoint 120 can determine that one or more trigger devices and/or responding devices have newly established connections with the first endpoint 110 based on the change in the topology, and therefore one or more rules related to the trigger devices and/or responding devices are executable by the first endpoint 110. For example, the second endpoint 120 may determine that a smart light bulb in the doorway has newly established a connection with the first endpoint 110, and therefore one or more rules related to the smart light bulb is executable by the first endpoint 110. As an example, the one or more rules may indicate, a trigger condition of detecting a door lock of a house being opened and an action of turning on the smart light bulb gradually with gradual change in brightness in response to the trigger condition being satisfied, or indicate a trigger condition of detecting people moving at the doorway and an action of turning on the smart light bulb and then turning it off after 2 seconds in response to the trigger condition being satisfied.

In another case, the second endpoint 120 can determine that one or more trigger devices and/or responding devices have disconnected from the first endpoint 110 based on the reported change in the topology by the first endpoint 110, and therefore one or more rules related to the corresponding trigger devices and/or responding devices are no longer executable by the first endpoint 110. For example, the second endpoint 120 may determine that an air conditioner in the living room has disconnected from the first endpoint 110, and therefore one or more rules related to the air conditioner is no longer executable by the first endpoint 110.

After determining the one or more rules, the second endpoint 120 may send the one or more rules that are determined to be executable to the first endpoint 110, or notify the one or more rules that are determined to be not executable to the first endpoint 110.

In some embodiments, in the case that the first endpoint 110 is notified the one or more rules that are determined to be not executable, the first endpoint 110 may delete the one or more rules from the first set of rules it maintained and therefore storage resources of the first endpoint 110 can be saved. In addition, the first endpoint 110 may further notify the deletion of the one or more rules to the second endpoint 120 through an acknowledgement message.

Although the one or more rules sent by the second endpoint 120 to the first endpoint 110 are determined to be executable, the first endpoint 110 may not support the rules due to its own control capability. For example, the first endpoint 110 may not support the action of turning on the smart light bulb gradually with gradual change in brightness as described above. Therefore, in some embodiments, in the case that the first endpoint 110 is sent the one or more rules that are determined to be executable by the second endpoint 120, the first endpoint 110 may further determine whether the one or more rules sent by the second endpoint 120 are supported by the first endpoint 110 before storing the one or more rules. The determination on whether the one or more rules sent by the second endpoint 120 are supported by the first endpoint 110 can be based on the topology recorded at the first endpoint 110 and metadata maintained at the first endpoint 110. The metadata may be established by considering both metadata of the trigger devices and responding devices connected to the first endpoint 110 and the control capability of the first endpoint 110. That is, the metadata maintained at the first endpoint 110 can indicate one or more trigger events that can be generated by each trigger device connected to the first endpoint, and one or more actions that can be performed by each responding device connected to the first endpoint and controlled by the first endpoint. The first endpoint 110 can store the one or more rules in response to determining that the one or more rules are supported. In this way, only the rules that can be executed by the first endpoint 110 are stored at the first endpoint 110, thereby managing the rules at the first endpoint 110 automatically without user intervention and saving storage resources of the first endpoint 110. In addition, the first endpoint 110 may further notify the reception/storing of the one or more rules to the second endpoint 120 through an acknowledgement message, or notify the denying of the one or more rules to the second endpoint 120 through a negative acknowledgement message.

In some embodiments, the metadata mentioned above may be in the form of a thing model. The thing model is a data model defined by the Internet of Things technology for products, which is used to describe the functions of products. The thing model is a digital representation of entities in physical space (such as sensors, smart light bulbs, smart switches, smart curtains, etc.). The thing model describes what an entity is, what it can do and what information it can provide to the outside world from three dimensions: attributes, services and events.

Referring now back to Fig. 1. The first set of rules maintained at the first endpoint 110 and the second set of rules maintained at the second endpoint 120 can be used in the determination of whether a trigger condition is satisfied and the generation of the set of first endpoint commands and the set of second endpoint commands. In some embodiments, the determining that the one or more trigger events satisfy the first trigger condition by the first endpoint 110 and the second endpoint 120 respectively can comprise, determining whether the one or more trigger events comprise all trigger events indicated by the first trigger condition. For example, trigger events sent from the plurality of trigger devices 130 may include the "temperature of living room is 30°C" generated by a temperature and humidity sensor, and "people entering the living room" generated by a body sensor, and the first trigger condition indicated in a rule may be "there is someone in the living room and the temperature is above 26°C", then the first trigger condition is satisfied, the first endpoint 110 can generate a set of first endpoint commands accordingly, and the second endpoint 120 can generate a set of second endpoint commands accordingly. In the above scenario, the generated set of first endpoint commands and set of second endpoint commands may be related to an action of turning on an air conditioner (which is a responding device) in the living room indicated in the rule respectively, or the generated set of first endpoint commands and set of second endpoint commands may be related to actions of turning on the air conditioner in the living room at present and turning it off after a certain period of time indicated in the rule respectively.

In some embodiments, generating the set of first endpoint commands by the first endpoint can comprise generating each first endpoint command and a first endpoint command ID carried by each first endpoint command. As described above, each rule in the first set of rules can indicate a trigger condition and one or more actions corresponding to the trigger condition. The generating each first endpoint command can be based on an action of one or more actions indicated in the first set of rules, and the one or more actions herein refer to the actions corresponding to the first trigger condition. As described above, each trigger event carries a unique event ID related to a time stamp. Each first endpoint command ID can be generated based on unique event ID(s) of the one or more trigger events corresponding to the first trigger condition and the first endpoint command, and therefore, the generated first endpoint command ID is also a unique ID and related to the time stamp.

Similarly, generating the set of second endpoint commands by the second endpoint can comprise generating each second endpoint command and a second endpoint command ID carried by each second endpoint command. The generating each second endpoint command can be based on an action of one or more actions indicated in the second set of rules, and the one or more actions herein refer to the actions corresponding to the first trigger condition. Also, each second endpoint command ID can be generated based on unique event ID(s) of the one or more trigger events corresponding to the first trigger condition and the second endpoint command, and therefore, the generated second endpoint command ID is also a unique ID and related to the time stamp. The first endpoint command IDs and the second endpoint command IDs can be generated or calculated using the well-known algorithms in the art, and the present disclosure does not limit the specific manner for generation or calculation of the command IDs.

It should be appreciated that since the first set of rules is a subset of the second set of rules, the one or more actions corresponding to the same trigger condition may be defined as the same for the first endpoint and the second endpoint, and accordingly, the generated first endpoint command and the generated second endpoint command may correspond to the same action and carry the same command ID.

The first endpoint 110 can be configured to send the generated set of first endpoint commands to a responding device, for example responding device 140-1, among the plurality of responding devices 140. Similarly, the second endpoint 120 can be configured to send the generated set of second endpoint commands to the same responding device 140-1. Accordingly, the responding device 140-1, which receives the set of first endpoint commands and the set of second endpoint commands, can be configured to perform a set of actions based on received commands. In the above scenario where the first trigger condition may be "there is someone in the living room and the temperature is above 26°C", the responding device 140-1 may be an air conditioner, and the performed set of actions may be turning on the air conditioner, or turning on the air conditioner and turned it off after 30 minutes. In this way, commands can be generated and sent in parallel from the first endpoint 110 and the second endpoint 120 to a controlled device in a smart home environment, i.e., the responding device 140-1, so as to control the device to perform one or more desired linkage actions in the smart home environment. In this way, a real "twin-control" mechanism can be realized, a success rate of execution of linkage actions and in turn a reliability of smart home control can be improved.

A generated first endpoint command and a generated second endpoint command based on the same first trigger condition may correspond to a same action due to the "twin-control" mechanism. It is preferred only one command of the first endpoint command and the second endpoint command is executed, so as to avoid the same action being repeatedly performed. As described above, each command in the set of first endpoint commands and the set of second endpoint commands may carry a command ID. This command ID can be used to perform a de-duplication of the commands received by the responding device. In some embodiments, the performing the set of actions by the responding device can comprise performing one of a first action and a second action. The first action can be indicated by a first command in the set of first endpoint commands, the second action can be indicated by a second command in the set of second endpoint commands, and the first command and the second command can carry a same command ID. In this way, actions corresponding to commands generated by the first endpoint 110 and the second endpoint 120 respectively for the same first trigger condition can be executed only once, therefore avoiding a same action being repeatedly performed.

In some embodiments, in order to achieve the de-duplication of the commands, each of the plurality of responding devices 140 can maintain a queue of command IDs, with each command ID in the queue corresponding to an action that has been performed within a predetermined period. The queue may be maintained in a cache of the responding device. This cache will be cleared if existence of command IDs maintained therein exceed an aging time, or the oldest command ID will be cleared if the queue exceeds an upper limit of the cache. When the responding device receives a first endpoint command or a second endpoint command, it firstly checks whether a command ID which is the same as the one carried by the received command already exists in the queue. If the same command ID exists, the received first endpoint command or second endpoint command at this time will be ignored; otherwise, the received first endpoint command or second endpoint command will be executed immediately and the command ID carried by the received command will be added to the queue.

In order to receive trigger events from the plurality of trigger devices 130 and send commands to the plurality of responding devices 140, the first endpoint 110 and the second endpoint 120 need to establish connections with the plurality of trigger devices 130 and the plurality of responding devices 140. In some embodiments, the connections can be established upon receiving trigger events or sending commands. In some embodiments, in order to improve the response speed of the smart home system, the connections can be established in advance, for example, before receiving the one or more trigger events.

In some embodiments, the plurality of trigger devices and the plurality of responding devices can be divided into low-power devices and direct-connected devices. The low-power devices herein refer to devices with low power consumption requirements, which usually include battery-powered devices or devices that do not have a constant power supply. The direct-connected devices herein refer to devices without low power consumption requirements and therefore can establish a persistent connection with the first endpoint. The first endpoint 110 may establish a connection with a low-power device through low-power wireless communication protocols such as Bluetooth, Zigbee and Sub-1G, and may establish a connection with a direct-connected device through a persistent connection, such as a TCP persistent connection or a HTTP persistent connection. In this way, the low power consumption requirements of the low-power devices may be satisfied, meanwhile, a more stable connection can be established for the direct-connected devices without low power consumption requirements. The second endpoint 120 may establish a connection with a direct-connected device through a remote connection such as a cloud connection (for example, via a router and the Internet) and establish a connection with a low-power device via the first endpoint 110.

It should be appreciated by the skilled in the art trigger devices may also be responding devices. For example, a smart switch can collect its own on/off state information, and can also be controlled to be turned on and off. It should also be appreciated by the skilled in the art that although the trigger devices 130 are shown in Fig. 1 as comprising 3 trigger devices 130-1 to 130-3, the smart home system 100 can comprise more or less trigger devices than those shown in Fig. 1, for example, the smart home system 100 can comprise 1 trigger device, 20 trigger devices and so on, the total number of trigger devices is not limited in the present disclosure. Similarly, although the responding devices 140 are shown in Fig. 1 as comprising 2 responding devices 140-1 to 140-2, the smart home system 100 can comprise more or less responding devices than those shown in Fig. 1, for example, the smart home system 100 can comprise 1 responding device, 10 responding devices and so on, the total number of responding devices is not limited in the present disclosure.

According to embodiments of the present disclosure, commands can be generated and sent in parallel from a first endpoint and a second endpoint to a responding device in a smart home environment, so as to control the device to perform one or more desired actions in the smart home environment. In this way, a real "twin-control" mechanism can be realized, a success rate of execution of linkage actions and in turn a reliability of smart home control can be improved.

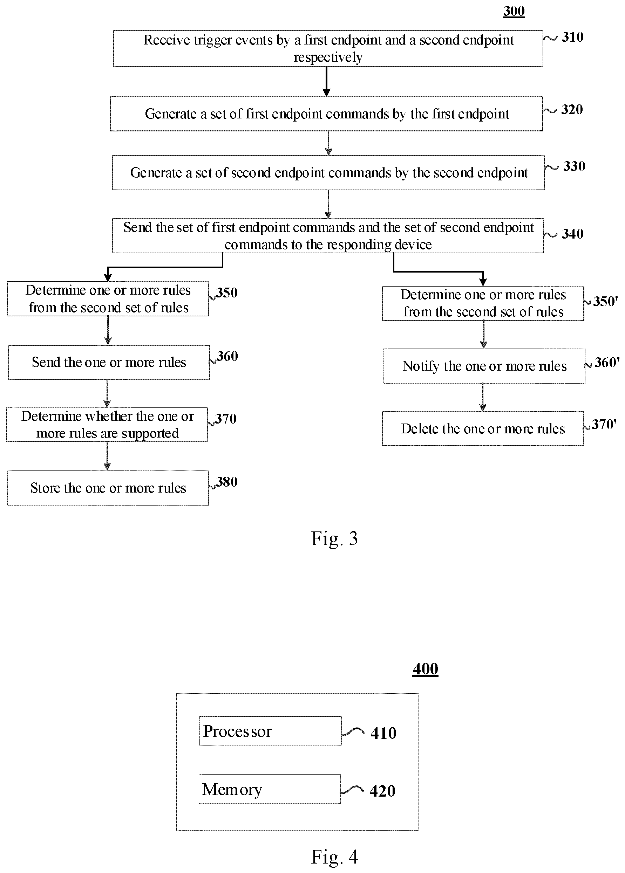

Referring now to Fig. 3, where it is shown a flowchart of a method 300 of controlling a responding device in a smart home system according to an embodiment of the present disclosure. The method 300 in Fig. 3 can be performed in the smart home system 100 in Fig. 1. The following descriptions will be made by referring to Fig. 1 and Fig. 3.

As shown in Fig. 3, the method 300 may comprise the following steps. At step 310, one or more trigger events can be received by a first endpoint 110 and a second endpoint 120 respectively. At step 320, a set of first endpoint commands can be generated by the first endpoint 110 in response to determining that the one or more trigger events satisfy a first trigger condition. At step 330, a set of second endpoint commands can be generated by the second endpoint 120 in response to determining that the one or more trigger events satisfy the first trigger condition. At step 340, the set of first endpoint commands can be sent to the responding device 140 by the first endpoint 110, and the set of second endpoint commands can be sent to the responding device 140 by the second endpoint 120, to control the responding device 140 to perform a set of actions. Although step 330 is shown to be performed after step 320, it can be understood by the skilled in the art that steps 320 and 330 can be performed in parallel, or step 320 can be performed after step 330.

In some embodiments, each command in the set of first endpoint commands and the set of second endpoint commands can carry a command ID. The performing the set of actions can comprise performing one of a first action indicated by a first command in the set of first endpoint commands and a second action indicated by a second command in the set of second endpoint commands. The first command and the second command can carry a same command ID.

In some embodiments, a first set of rules can be maintained at the first endpoint 110 and a second set of rules can be maintained at the second endpoint 120, each rule can indicate a trigger condition and one or more actions corresponding to the trigger condition, and the trigger condition can indicate a set of trigger events. The first set of rules can be a subset of the second set of rules.

In some embodiments, the method 300 may further comprise steps 350-360. At step 350, one or more rules from the second set of rules that are executable by the first endpoint 110 can be determined by the second endpoint 120 based on a change in a topology of the smart home system reported by the first endpoint 110. The topology can be related to trigger devices and responding devices which have established connections with the first endpoint. At step 360, the one or more rules can be sent to the first endpoint 110 by the second endpoint 120.

In some embodiments, the method 300 may further comprise steps 370-380. At step 370, whether the one or more rules sent by the second endpoint 120 are supported can be determined by the first endpoint 110 based on the topology and metadata maintained at the first endpoint 110. The metadata can indicate one or more trigger events that can be generated by each trigger device connected to the first endpoint 110, and one or more actions that can be performed by each responding device connected to the first endpoint 110 and controlled by the first endpoint 110. At step 380, the one or more rules can be stored at the first endpoint 110 in response to determining that the one or more rules are supported.

In some embodiments, the method 300 may further comprise steps 350'-360'. At step 350', one or more rules in the first set of rules that are not executable by the first endpoint 110 can be determined by the second endpoint 120 based on a change in a topology of the smart home system reported by the first endpoint 110. The topology can be related to trigger devices and responding devices which have established connections with the first endpoint. At step 360', the one or more rules can be notified to the first endpoint 110 by the second endpoint 120.

In some embodiments, the method 300 may further comprise a step 370'. At step 370', the one or more rules can be deleted from the first set of rules by the first endpoint 110.

In some embodiments, connections with the plurality of trigger devices and the plurality of responding devices can be established by the first endpoint 110 before receiving the one or more trigger events.

In some embodiments, the plurality of trigger devices and the plurality of responding devices can be divided into low-power devices and direct-connected devices. The first endpoint may establish a connection with a low-power device through low-power wireless communication protocol, and establish a connection with a direct-connected device through a persistent connection.

In some embodiments, determining that the one or more trigger events satisfy the first trigger condition can comprise determining whether the one or more trigger events comprise all trigger events indicated by the first trigger condition.

In some embodiments, generating the set of first endpoint commands by the first endpoint 110 can comprise generating each first endpoint command based on an action of one or more actions indicated in the first set of rules, the one or more actions corresponding to the first trigger condition; and generating a first endpoint command ID carried by each first endpoint command based on unique event ID(s) of the one or more trigger events and the first endpoint command, and generating the set of second endpoint commands by the second endpoint 120 can comprise generating each second endpoint command based on an action of one or more actions indicated in the second set of rules, the one or more actions corresponding to the first trigger condition; and generating a second endpoint command ID carried by each second endpoint command based on unique event ID(s) of the one or more trigger events and the second endpoint command.

In some embodiments, the responding device can maintain a queue of command IDs, and each command ID in the queue corresponds to an action that has been performed within a predetermined period.

Details of steps of method 300 have already been described above in the embodiments of the smart home system 100 with reference to FIGs. 1 and 2, and therefore are not repeated herein for conciseness.

According to embodiments of the present disclosure, commands can be generated and sent in parallel from a first endpoint and a second endpoint to a responding device in a smart home environment, so as to control the device to perform one or more desired actions in the smart home environment. In this way, a real "twin-control" mechanism can be realized, a success rate of execution of linkage actions and in turn a reliability of smart home control can be improved.

Fig. 4 is an exemplary block diagram illustrating a device 400 according to an embodiment of the present disclosure. It should be noted that the device 400 depicted in Fig. 4 can correspond to a responding device 140 as described above and therefore be used to perform the operations of the responding device 140.

As shown in Fig. 4, the device 400 can comprise one or more processors 410 and a memory 420. The one or more processors 410 are communicatively coupled with the memory 420 and configured to perform the actions performed by the responding device 140 discussed above. The actions may include: receiving a set of first endpoint commands from a first endpoint, the set of first endpoint commands being generated by the first endpoint in response to one or more trigger events satisfying a first trigger condition; receiving a set of second endpoint commands from a second endpoint, the set of second endpoint commands being generated by the second endpoint in response to the one or more trigger events satisfying the first trigger condition; and performing a set of actions for the smart home system based on the set of first endpoint commands and the set of second endpoint commands.

In some embodiments, each command in the set of first endpoint commands and the set of second endpoint commands can carry a command ID, and performing the set of actions can comprise performing one of a first action indicated by a first command in the set of first endpoint commands and a second action indicated by a second command in the set of second endpoint commands. The first command and the second command can carry a same command ID.

In some embodiments, the actions further comprise maintaining a queue of command IDs. Each command ID in the queue can correspond to an action that has been performed within a predetermined period.

Examples of the one or more processors 410 comprise microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

The one or more processors 410 can execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on memory 420.

The memory 420 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The memory 420 may reside in the one or more processors 410, external to the one or more processors 410, or distributed across multiple entities including the one or more processors 410. The memory 420 may be embodied in a computer program product. By way of example, a computer program product may include a computer-readable medium in packaging materials. Those skilled in the art will recognize how to implement the described functionality presented throughout this disclosure depending on the particular application and the overall design constraints imposed on the overall system.

According to another embodiment of the present disclosure, a method performed by a device operating in a smart home system is disclosed. The method may comprise receiving a set of first endpoint commands from a first endpoint, the set of first endpoint commands being generated by the first endpoint in response to one or more trigger events satisfying a first trigger condition; receiving a set of second endpoint commands from a second endpoint, the set of second endpoint commands being generated by the second endpoint in response to the one or more trigger events satisfying the first trigger condition; and performing a set of actions for the smart home system based on the set of first endpoint commands and the set of second endpoint commands.

In some embodiments, each command in the set of first endpoint commands and the set of second endpoint commands can carry a command ID, and performing the set of actions can comprise performing one of a first action indicated by a first command in the set of first endpoint commands and a second action indicated by a second command in the set of second endpoint commands. The first command and the second command can carry a same command ID.

In some embodiments, the actions further comprise maintaining a queue of command IDs. Each command ID in the queue can correspond to an action that has been performed within a predetermined period.

In addition, according to still yet another aspect of the present disclosure, a computer program product for controlling a responding device in a smart home system is disclosed. As an example, the computer program product comprises a non-transitory computer readable storage medium having program instructions embodied therewith, and the program instructions are executable by a processor of the first endpoint or a processor of the second endpoint. When executed, the program instructions cause the processor to perform one or more of the described procedures above, and details are omitted herein for conciseness.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

Expression such as "according to", "based on", "dependent on", and so on as used in the disclosure does not mean "according only to", "based only on", or "dependent only on", unless it is explicitly otherwise stated. In other words, such expression generally means "according at least to", "based at least on", or "dependent at least on" in the disclosure.

Any reference in the disclosure to an element using the designation "first", "second" and so forth is not intended to comprehensively limit the number or order of such elements. These expressions can be used in the disclosure as a convenient method for distinguishing two or more units. Thus, a reference to a first unit and a second unit does not imply that only two units can be employed or that the first unit must precede the second unit in some form.

The term "determining" used in the disclosure can include various operations. For example, regarding "determining", calculating, computing, processing, deriving, investigating, looking up (e.g., looking up in tables, databases, or other data structure), ascertaining, and so forth are regarded as "determination". In addition, regarding "determining", receiving (for example, receiving information), transmitting (for example, transmitting information), input, output, accessing (for example, access to data in the memory), and so forth, are also regarded as "determining". In addition, regarding "determining", resolving, selecting, choosing, establishing, comparing, and so forth can also be regarded as "determining". That is, regarding "determining", several actions can be regarded as "determining".

The terms such as "connected", "coupled" or any of their variants used in the disclosure refer to any connection or combination, direct or indirect, between two or more units, which can include the following situations: between two units that are "connected" or "coupled" with each other, there are one or more intermediate units. The coupling or connection between the units can be physical or logical, or can also be a combination of the two. As used in the disclosure, two units can be considered to be electrically connected through the use of one or more wires, cables, and/or printed, and as a number of non-limiting and non-exhaustive examples, and are "connected" or "coupled" with each other through the use of electromagnetic energy with wavelengths in a radio frequency region, the microwave region, and/or in the light (both visible and invisible) region, and so forth.

When used in the disclosure or the claims "including", "comprising", and variations thereof, these terms are as open-ended as the term "having". Further, the term "or" used in the disclosure or in the claims is not an exclusive-or.

The present disclosure has been described in detail above, but it is obvious to those skilled in the art that the present disclosure is not limited to the embodiments described in the disclosure. The present disclosure can be implemented as a modified and changed form without departing from the spirit and scope of the present disclosure defined by the description of the claims. Therefore, the description in the disclosure is for illustration and does not have any limiting meaning to the present disclosure.

## Claims

1. A device operating in a smart home system, comprising:
one or more processors;
a memory coupled to at least one of the processors; and
a set of computer program instructions stored in the memory, which, when executed by at least one of the processors, performs actions of:
receiving a set of first endpoint commands from a first endpoint, wherein the set of first endpoint commands is generated by the first endpoint in response to one or more trigger events satisfying a first trigger condition;
receiving a set of second endpoint commands from a second endpoint, wherein the set of second endpoint commands is generated by the second endpoint in response to the one or more trigger events satisfying the first trigger condition; and
performing a set of actions for the smart home system based on the set of first endpoint commands and the set of second endpoint commands.

2. The device of claim 1, wherein each command in the set of first endpoint commands and the set of second endpoint commands carries a command ID, and wherein
performing the set of actions comprises performing one of a first action indicated by a first command in the set of first endpoint commands and a second action indicated by a second command in the set of second endpoint commands, wherein the first command and the second command carry a same command ID.

3. The device of claim 1, wherein the set of computer program instructions further performs actions of maintaining a queue of command IDs, and wherein each command ID in the queue corresponds to an action that has been performed within a predetermined period.

4. A smart home system comprising a first endpoint, a second endpoint, a plurality of trigger devices and a plurality of responding devices,
wherein each of the plurality of trigger devices is configured to:
generate one or more trigger events; and
send the one or more trigger events to the first endpoint and the second endpoint,
wherein the first endpoint is configured to:
generate a set of first endpoint commands in response to determining that the one or more trigger events satisfy a first trigger condition; and
send the set of first endpoint commands to a responding device among the plurality of responding devices,
wherein the second endpoint is configured to:
generate a set of second endpoint commands in response to determining that the one or more trigger events satisfy the first trigger condition; and
send the set of second endpoint commands to the responding device, and
wherein the responding device is configured to:
perform a set of actions based on the set of first endpoint commands and the set of second endpoint commands.

5. The smart home system of claim 4, wherein the first endpoint is a gateway, and the second endpoint is a cloud server.

6. The smart home system of claim 4,
wherein a first set of rules is maintained at the first endpoint and a second set of rules is maintained at the second endpoint, each rule indicates a trigger condition and one or more actions corresponding to the trigger condition, and the trigger condition indicates a set of trigger events, and
wherein the first set of rules is a subset of the second set of rules.

7. The smart home system of claim 6,
wherein the second endpoint is further configured to:
determine one or more rules from the second set of rules that are executable by the first endpoint based on a change in a topology of the smart home system reported by the first endpoint, wherein the topology is related to trigger devices and responding devices which have established connections with the first endpoint; and
send the one or more rules to the first endpoint.

8. The smart home system of claim 7,
wherein the first endpoint is further configured to:
determine whether the one or more rules sent by the second endpoint are supported based on the topology and metadata maintained at the first endpoint, wherein the metadata indicates one or more trigger events that can be generated by each trigger device connected to the first endpoint, and one or more actions that can be performed by each responding device connected to the first endpoint and controlled by the first endpoint; and
store the one or more rules at the first endpoint in response to determining that the one or more rules are supported.

9. The smart home system of claim 6,
wherein the second endpoint is further configured to:
determine one or more rules in the first set of rules that are not executable by the first endpoint based on a change in a topology of the smart home system reported by the first endpoint, wherein the topology is related to trigger devices and responding devices which have established connections with the first endpoint; and
notify the one or more rules to the first endpoint.

10. The smart home system of claim 6, wherein determining that the one or more trigger events satisfy the first trigger condition comprises:
determining whether the one or more trigger events comprise all trigger events indicated by the first trigger condition.

11. The smart home system of claim 6,
wherein generating the set of first endpoint commands by the first endpoint comprises:
generating each first endpoint command based on an action of one or more actions indicated in the first set of rules, the one or more actions corresponding to the first trigger condition; and
generating a first endpoint command ID carried by each first endpoint command based on unique event ID(s) of the one or more trigger events and the first endpoint command, and
wherein generating the set of second endpoint commands by the second endpoint comprises:
generating each second endpoint command based on an action of one or more actions indicated in the second set of rules, the one or more actions corresponding to the first trigger condition; and
generating a second endpoint command ID carried by each second endpoint command based on unique event ID(s) of the one or more trigger events and the second endpoint command.

12. The smart home system of claim 4, wherein each command in the set of first endpoint commands and the set of second endpoint commands carries a command ID, and wherein
performing the set of actions by the responding device comprises performing one of a first action indicated by a first command in the set of first endpoint commands and a second action indicated by a second command in the set of second endpoint commands, wherein the first command and the second command carry a same command ID.

13. The smart home system of claim 4, wherein the responding device maintains a queue of command IDs, each command ID in the queue corresponds to an action that has been performed within a predetermined period.

14. A method of controlling a responding device in a smart home system, the method comprising:
receiving one or more trigger events by a first endpoint and a second endpoint respectively;
generating a set of first endpoint commands by the first endpoint in response to determining that the one or more trigger events satisfy a first trigger condition;
generating a set of second endpoint commands by the second endpoint in response to determining that the one or more trigger events satisfy the first trigger condition; and
sending the set of first endpoint commands to the responding device by the first endpoint, and sending the set of second endpoint commands to the responding device by the second endpoint, to control the responding device to perform a set of actions.

15. The method of claim 14, wherein each command in the set of first endpoint commands and the set of second endpoint commands carries a command ID, and wherein
performing the set of actions comprises performing one of a first action indicated by a first command in the set of first endpoint commands and a second action indicated by a second command in the set of second endpoint commands, wherein the first command and the second command carry a same command ID.
